# EUROPEAN PATENT SPECIFICATION

(11) **EP 1 216 546 B1**
(45) Date of publication and mention of the grant of the patent: **07.07.2010**
(21) Application number: 00967119.9
(22) Date of filing: 29.09.2000
(51) Int. Cl.: H04W 16/14

(54) **WIRELESS COMMUNICATION OF CONCURRENT VOICE AND DATA USING OVERLAPPING PROTOCOLS**
DRAHTLOSE KOMMUNIKATION VON MIT DATEN KONKURRIERENDER SPRACHE MIT ÜBERLAPPENDEN PROTOKOLLEN
COMMUNICATION HERTZIENNE SIMULTANEE VOCALE ET DE DONNEES UTILISANT DES PROTOCOLES CHEVAUCHANTS

(30) Priority: 29.09.1999 US 408725; 12.11.1999 US 439946; 12.11.1999 US 438215; 06.04.2000 US 544325
(43) Date of publication of application: 26.06.2002
(73) Proprietor: Intel Corporation, Santa Clara, CA 95054-1549 (US)
(72) Inventor: NEVO, Ron, Beaverton, OR 97006 (US); MONELLO, Brett, A., Lake Oswego, OR 94037 (US)
(74) Representative: Calderbank, Thomas Roger
(86) International application number: PCT/US2000/026857
(87) International publication number: WO 2001/024458

(56) References cited:
- WO-A-99/29126
- NEGUS K J ET AL: "HOME RF TM AND SWAP: WIRELESS NETWORKING FOR THE CONNECTED HOME" MOBILE COMPUTING AND COMMUNICATIONS REVIEW,US,ACM, NEW YORK, NY, vol. 2, no. 4, 1 October 1998 (1998-10-01), pages 28-36, XP000786057

## Description

### FIELD OF THE INVENTION

The present invention relates to the field of wireless communication. More specifically, the present invention relates to the problem of concurrent wireless voice and data communication with multiple communication partners of different wireless communication protocols.

### BACKGROUND OF THE INVENTION

Advances in microprocessor and communication technology have led to the increase in popularity of wireless communication. Once confined to the privileged. wireless voice communication have become affordable and available to the masses. Today, various efforts are under way to apply wireless communication to replace attachment cables used for attaching peripheral devices, such as printers, scanners and the like, as well as networking cables used for connecting clients, servers and the like. Examples of technology to accomplish these goals include the different variants of the IEEE 802.11 Standard published by the Institute of Electrical and Electronic Engineers, 802.11 (Frequency Hopping, Direct Sequence), 802.1 a, 802.11b, as well as Home RF, also known as Shared Wireless Access Protocol (SWAP) to those skilled in the art.

It is desirable for various applications (e.g., voice and data) to have wireless devices that operate in accordance with different protocols, and overlapping frequencies, to operate proximately located to each other. Most wireless protocols employ carrier sense collision detection, and random back off to resolve collision or interference. However, experience has shown that prior art collision detection and back off approaches could substantially degrade the performance of both networks operating with overlapping frequencies. Accordingly, an improved approach to allow wireless devices operating with different protocols and overlapping frequencies to operate proximately close to each other is needed.

WO 99/29126 discloses a terminal which can operate simultaneously in a first and a second radio communications network. The terminal includes a first transceiver which transmits and receives in the first radio communications network and a second transceiver which transmits and receives in the second radio communications networks. The terminal synchronises transmissions from the transceivers to prevent signal collision.

### SUMMARY OF THE INVENTION

According to one aspect of the invention, there is provided a method comprising:
transmitting a first block of data according to a
first protocol from a first wireless device;
   transmitting a second block of data in one of multiple slots in a first packet and one of multiple slots in a second packet according to a second protocol from a second wireless device when no conflict exists between transmission of the first block of data and transmission of the first and second packets of the second protocol, wherein the first packet and the second packet are transmitted at different frequencies;
   receiving, in the second wireless device, signals transmitted by the first wireless device in accordance with the first protocol;
   predicting in the second wireless device, based on the received signals of the first protocol, when interference will occur;
   blocking transmission of one of the first packet and the second packet in the second wireless device if the other of the first packet and the second packet transmitted according to the second protocol is predicted to interfere with transmission of the first block of data; and
   blocking transmission of the first packet and the second packet in the second wireless device if the first packet and the second packet transmitted according to the second protocol are predicted to interfere with transmission of the first block of data.

### BRIEF DESCRIPTION OF THE DRAWINGS

The invention is illustrated by way of example, and not by way of limitation in the figures of the accompanying drawings in which like reference numerals refer to similar elements.
**Figure 1** illustrates one embodiment of an overlapping network environment incorporated with the teachings of the invention.
**Figures 2a-2b** illustrate one embodiment of an architectural view and operation flow of "fully" enhanced wireless devices.
**Figure 3** is a flow chart of one embodiment support for simultaneous operation of IEEE 802.11 and SWAP.
**Figures 4a-4b** illustrate one embodiment of an architectural view and operation flow of "fully" enhanced wireless devices in further detail.
**Figures 5a-5b** illustrate one embodiment of an architectural view and operation flow of "fully" enhanced wireless devices in further detail.
**Figures 6a-6b** illustrate one embodiment of an architectural view and operation flow of "fully" enhanced wireless devices in further detail.
**Figure 7** illustrates the concept of a notch filter.

### DETAILED DESCRIPTION

In the following description, various aspects of the present invention will be described. However, it will be apparent to those skilled in the art that the present invention may be practiced with only some or all aspects of the present invention. For purposes of explanation, specific numbers, materials and configurations are set forth in order to provide a thorough understanding of the present invention. However, it will also be apparent to one skilled in the art that the present invention may be practiced without the specific details. In other instances, well known features are omitted or simplified in order not to obscure the present invention.

Parts of the description will be presented using software terminology commonly employed by those skilled in the art to convey the substance of their work to others skilled in the art. As well understood by those skilled in the art, these software quantities take the form of electrical, magnetic, or optical signals capable of being stored, transferred, combined, and otherwise manipulated through mechanical and electrical components of a digital system; and the term digital system includes general purpose as well as special purpose processors, systems, and the like, that are standalone, adjunct or embedded.

Various operations will be described as multiple discrete steps performed in turn in a manner that is most helpful in understanding the present invention, however, the order of description should not be construed as to imply that these operations are necessarily order dependent, in particular, the order the steps are presented. Furthermore, the phrase "in one embodiment" will be used repeatedly, however the phrase does not necessarily refer to the same embodiment, although it may.

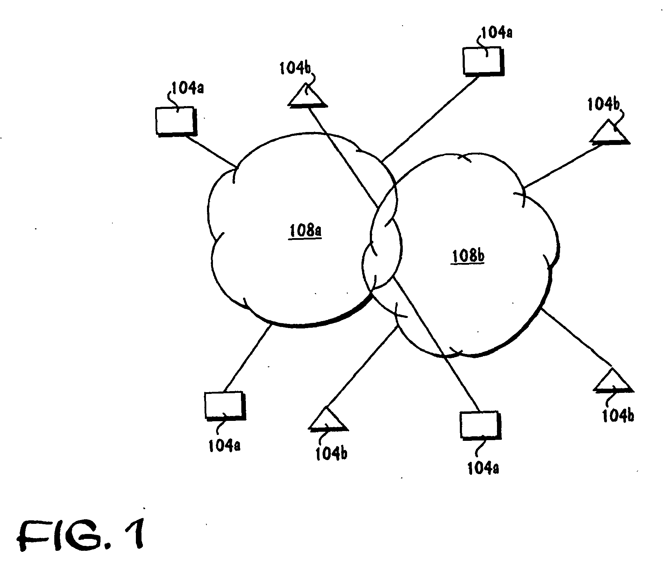

Referring now to **Figure 1****,** wherein an overview of an overlapping network environment incorporated with the teachings of the present invention is shown. As illustrated, overlapping wireless network environment **100** includes wireless network devices **104a** of first wireless network **108a** operating in accordance with a first wireless protocol (e.g., SWAP), and wireless network devices **104b** of second wireless network **108b** operating in accordance with a second wireless protocol (e.g., IEEE 802.11). Wireless devices **104a** and **104b** are proximately located to each other, with at least some of wireless devices **104a** and **104b** being sufficiently close, such that when they transmit on the same frequency, they interfere (or "collide" or "conflict") with each other. One or more wireless devices **104a** and **104b** are incorporated with the teachings of the present invention to facilitate proactive interference avoidance or resolution. As a result, the number of conflicts and the number of times wireless devices **104a** and **104b** go through the costly prior art back off, retry approaches are reduced, leading to overall improvement in efficiency for both wireless networks **108a-108b.**

In one embodiment, all devices **104a** are incorporated with the teachings of the present invention to predict when an interference will occur, and proactively avoid or resolve the interference (hereinafter, "fully enhanced" devices). In another embodiment, only some of devices **104a** are so enhanced (one or more). In yet another embodiment, while only some of devices **104a** are so enhanced (one or more), other devices **104a** not so "enhanced" are nevertheless "minimally enhanced" to request the "fully enhanced" devices 104a to at least preemptively notify them on when an interference is predicted to occur (hereinafter, "minimally enhanced" devices). The "fully enhanced" devices **104a** are further equipped to provide the preemptive notifications.

Likewise, in one embodiment, all devices **104b** are incorporated with the teachings of the present invention to predict when an interference will occur, and proactively avoid or resolve interference (hereinafter, "fully enhanced" devices). In another embodiment, only some of devices **104b** are so enhanced. In yet another embodiment, while only some of devices **104b** are so enhanced, other devices **104b** not so enhanced are nevertheless "minimally" enhanced to request the "fully enhanced" devices **104b** to at least preemptively notify them on when interference is predicted to occur (hereinafter, "minimally enhanced" devices). The "fully enhanced" devices **104b** are further equipped to provide the preemptive notifications.

In one embodiment, wireless network protocol **108a** is IEEE 802.11b and wireless network protocol **108b** is SWAP 1.1. Other protocols can also be used, for example, IEEE 802.11 a, other IEEE 802.11 protocols, other versions of SWAP, etc. In one embodiment, wireless network protocol **108a** uses a 22 MHz range around a center frequency to transmit and receive data. In an alternate embodiment, wireless network protocol **108a** uses a 16 MHz range around a center frequency to transmit and receive data. Other ranges can also be used. In one embodiment, wireless network protocol **108b** transmits and receives both voice and data information on a sequence of frequencies in 20 ms intervals. Furthermore, SWAP packets have two 2.4 ms voice fields and voice information is transmitted in voice fields of two consecutive packets. Thus, voice data is transmitted at two different frequencies.

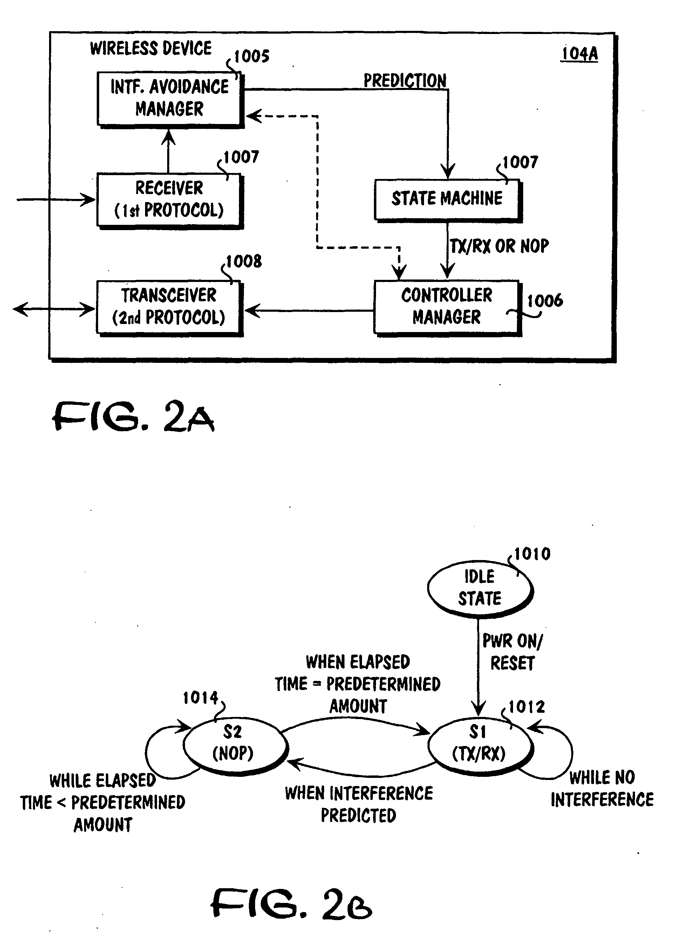

**Figures 2a-2b** illustrate the architecture and operational flow of an enhanced wireless device **104b** of **Fig. 1** in accordance with one embodiment (a "fully enhanced" embodiment). Wireless devices **104b** are enhanced to be voluntary dominated devices, allowing wireless devices **104a** to be the dominant devices, to proactively avoid interference. Enhanced wireless devices **104b** are to predict when an interference will occur, and at each of such predicted occurrence, voluntarily suspend operation (for a brief moment) to proactively refrain from interfering with wireless devices **104a.**

As illustrated in **Fig. 2a****,** to enable wireless devices **104b** to so operate, each wireless device **104b,** in addition to conventional transceiver **1008** and controller manager **1006,** is additionally provided with state machine **1004,** receiver **1007** and interference avoidance manager **1005.** The elements are coupled to each other as shown.

Receiver **1007** is used to additionally receive signals transmitted in accordance with the first protocol (e.g., IEEE 802.11) between wireless devices **104a,** thus allowing the enhanced wireless device **104b,** to be able to receive signals in the first protocol, in addition to transmitting and receiving signals in the second protocol (e.g., SWAP). Interference avoidance manager **1005** is equipped to determine at least a signaling characteristic of the first protocol, and predicts when an interference will occur, based on the determined one or more signal characteristics. For the illustrated embodiment, interference avoidance manager **1005** determines the frequency used by devices **104a,** and predicts when an interference will occur based on the determined frequency or frequency hopping pattern. The determination may be made in any one of a number of techniques known in the art.

State machine **1004** is used to periodically generate a TX/RX or NOP control signal for controller manager **1006** to control transceiver **1008** accordingly, i.e. to transmit/receive or suspend operation (to proactively avoid interference). State machine **1004** generates the TX/RX or NOP control signal based on whether an interference is predicted by interference avoidance manager **1005.**

As illustrated in **Fig. 2b****,** state machine **1004,** in addition to idle state **1010,** has two operating states (S1-S2) **1012-1014.** In state S1, state machine **1004** outputs the TX/RX control signal denoting performance of transmit/receive operation, and in state S2, state machine **1004** outputs the NOP control signal denoting suspension of transmit/receive operation.

Upon power-on or reset, state machine **1004** transitions from idle state **1010** to S1 state **1012.** While in S1 state **1012,** state machine **1004** remains in the state as long as an interference is not predicted by interference avoidance manager **1005,** outputting the TX/RX control signal for controller manager **1006.** Whenever an interference is predicted by interference avoidance manager **1005,** state machine **1004** transitions from S1 state **1012** to S2 state **1014.** While in S2 state **1014,** state machine **1004** remains in the state for a predetermined duration, outputting the NOP signal denoting suspension of transmit/receive operations for controller manager **1006.** The predetermined duration may be "hardwired", denoted through jumpers, or set through configuration registers, and the like. Upon expiration of the predetermined duration, state machine **1004** transitions from S2 state **1014** to S1 state **1012.** From S1 state **1012,** state machine **1004** continues operation as described earlier.

Except for the generation of the TX/RX and NOP control signals, and the control of transceiver **1008** by controller manager **1006** in accordance with these control signals, proactively avoiding interference with wireless device **104a,** each wireless device **104b,** including controller manager **1006** and transceiver **1008,** otherwise operates as known in the art.

Referring again to **Fig. 2a****,** in one embodiment, in support of the "minimally enhanced" devices **104b,** interference avoidance manager **1005** further monitors signals received by transceiver **1008** from other devices **104b.** In particular, interference avoidance manager **1005** monitors for requests from other "minimally enhanced" devices **104b** to be preemptively notified of a predicted occurrence of an interference. Upon receiving at least one such request, interference avoidance manager **1005** further causes each prediction to be broadcast for other devices **104b,** thereby allowing the "minimally enhanced" devices **104b** to be able to voluntarily behave as dominated devices (in favor of wireless devices **104a,** the dominant devices).

A "minimally enhanced" device **104b** may be constituted by slightly modifying controller manager **1006,** and additionally provided with only state machine **1007** (i.e., without providing receiver **1007** and interference manager **1005**). Controller manager **1006** is slightly modified to broadcast a request to the "fully enhanced" devices **104b,** to preemptively provide a prediction of interference, as described earlier. The broadcast e.g. may be made upon power on, reset, or periodically. State machine **1007** operates substantially as described earlier, i.e. outputting TX as long as no prediction of an interference occurrence is received, and outputting NOP for a predetermined duration whenever a prediction of an interference occurrence is received.

In one embodiment, in order to avoid conflicts between IEEE 802.11 transactions (transmit or receive) and SWAP transactions, if the SWAP-based transaction falls within the IEEE 802.11 transaction frequency the SWAP packet is not transmitted. As mentioned above, blocks of voice data are transmitted in slots of two consecutive SWAP packets. For a particular block of voice data, if one of the two packets in which the block is transmitted is blocked, the block of data is still transmitted. However, the advantages (e.g., error correction) available from transmitting the block of data twice are reduced.

If both packets in which the block of data is to be transmitted are blocked, the block of data is lost and not transmitted in subsequent packets. As described below, the probability of not transmitting a block of data is relatively low and the block of data represents only 2.4 ms of voice data, which is a relatively small loss.

Because the hop sequence of SWAP is a simple cycle between frequencies in a pseudo-random manner, the number of collisions can be quite low. Table 1 shows the collision probability for each possible IEEE 802.11 band assuming 22 MHz filters are used.

**Table 1: Hit probability for IEEE 802.11B with 22 MHz bands and SWAP 1.1**

| Center Frequency (MHz) | 2412 | 2417 | 2422 | 2427 | 2432 | 2437 | 2442 |
|---|---|---|---|---|---|---|---|
| Number of Hits | 1 | 4 | 2 | 0 | 2 | 4 | 3 |
| Probability | 0.002 | 0.007 | 0.003 | 0 | 0.003 | 0.007 | 0.005 |
| Center Frequency (MHz) | 2447 | 2452 | 2457 | 2462 | 2467 | 2472 | |
| Number of Hits | 5 | 1 | 1 | 0 | 2 | 2 | |
| Probability | 0.008 | 0.002 | 0.002 | 0 | 0.003 | 0.003 | |

The center frequencies are the possible center frequencies while operating according to IEEE 802.11. The number of hits is the number of consecutive hop pairs that fall within the 22 MHz band of the IEEE 802.11 center frequency. The probability is the probability of a hit assuming a 309 µsec IEEE 802.11 slot with four simultaneous SWAP supported calls.

If 16 MHz band are used with IEEE 802.11 communications, the number of hits is further reduced.

**Table 2: Hit probability for IEEE 802.11B with 16 MHz bands and SWAP 1.1**

| Center Frequency (MHz) | 2412 | 2417 | 2422 | 2427 | 2432 | 2437 | 2442 |
|---|---|---|---|---|---|---|---|
| Number of Hits | 0 | 1 | 0 | 0 | 1 | 1 | 1 |
| Probability | 0 | 0.002 | 0 | 0 | 0.002 | 0.002 | 0.002 |
| Center Frequency (MHz) | 2447 | 2452 | 2457 | 2462 | 2467 | 2472 | |
| Number of Hits | 0 | 1 | 0 | 0 | 0 | 1 | |
| Probability | 0 | 0.002 | 0 | 0 | 0 | 0.002 | |

The number of hits is the number of consecutive hop pairs that fall within the 16 MHz band of the IEEE 802.11 center frequency. The probability is the probability of a hit assuming a 309 µsec IEEE 802.11 slot with four simultaneous SWAP supported calls. Thus, by using narrower band filters for IEEE 802.11 communications, the amount of SWAP data lost can be reduced.

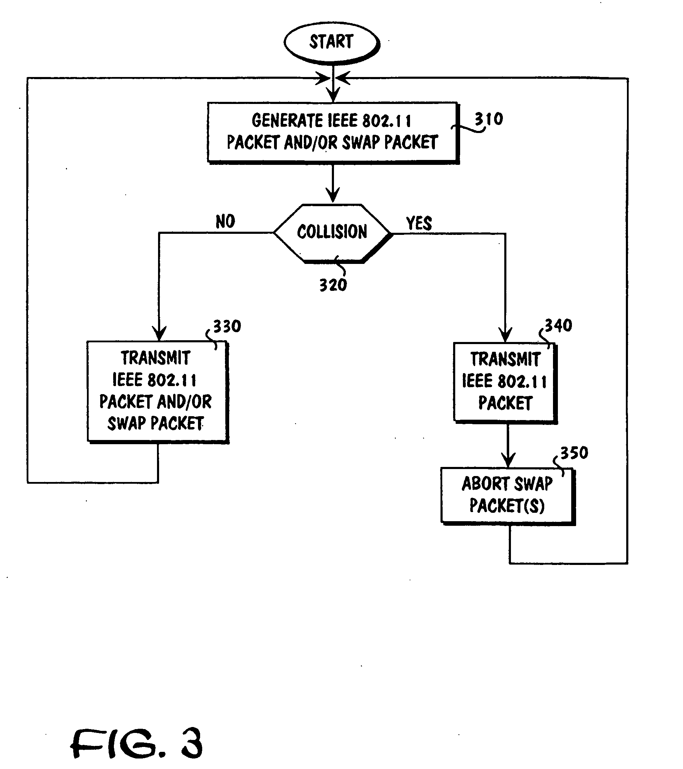

**Figure 3** is a flow chart of one embodiment support for simultaneous operation of IEEE 802.11 and SWAP. Packets are generated according to IEEE 802.11 and/or SWAP at **310.** Generation of data and/or voice packets according to IEEE 802.1 and SWAP are known to those of ordinary skill in the art.

Controller managers **106a** and/or **106b** determine whether a collision will occur between an IEEE 802.11 packet and one or more SWAP packets at **320.** A collision occurs if both transceiver **102a** and transceiver **102b** attempt to transmit or receive packets at the same frequency at the same time. If no collision is detected at **320** the IEEE 802.11 packet and/or the SWAP 1.1 packet are transmitted at **330.** The process then repeats for subsequent transmissions.

If a collision is detected at **320,** the IEEE 802.11 packet is transmitted at **340.** The SWAP packets that cause the collision are aborted at **350.** Any number of SWAP packets can be aborted to avoid a collision. Typically, however, only one or two SWAP packets are aborted. The process then repeats for subsequent transmissions. In one embodiment, aborting the SWAP packet(s) causes 2.4 µsec of voice data to be lost per packet.

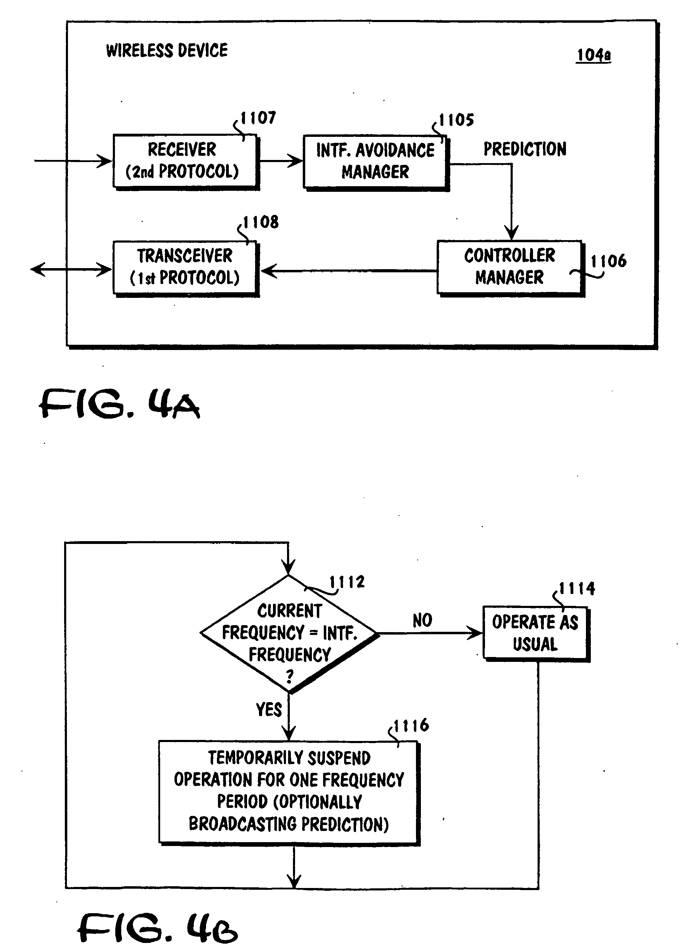

**Figures 4a-4b** illustrate the architecture and operational flow of an enhanced wireless device **104a** of **Fig. 1** in accordance with one embodiment (a "fully enhanced" embodiment). As described earlier, wireless devices **104a** are enhanced to be the voluntary dominated devices, allowing wireless devices **104b** to be the dominant devices, to proactively avoid interference. In one embodiment, the dominated device is a SWAP device and the dominate device is an IEEE 802.11 direct sequence spread spectrum (DSSS) device. Other configurations can also be provided. Enhanced wireless devices **104a** are to determine when a current frequency interferes with wireless device **104b,** and at each of such determination (or "prediction", albeit with certainty), voluntarily suspend operation (for a brief moment) to proactively refrain from interfering with wireless devices **104b.**

As illustrated in **Fig. 4a****,** to enable wireless devices **104a** to so operate, each wireless device **104a,** in addition to conventional transceiver **1108** and controller manager **1106,** is additionally provided with receiver **1107** and interference avoidance manager **1105.** The elements are coupled to each other as shown.

Receiver **1107** is used to additionally receive signals transmitted in accordance with the second protocol between wireless devices **104b,** thus allowing the enhanced wireless device **104a,** to be able to receive signals in the second protocol, in addition to transmitting and receiving signals in the first protocol. Interference avoidance manager **1105** is equipped to determine at least a signaling characteristic of the second protocol, monitor controller manager **1106,** determine if an interference is to occur based on the determined one or more signal characteristics, and proactively avoid the interference. For the illustrated embodiment, interference avoidance manager **1105** determines the signaling frequency of the second protocol, monitors the pseudo random frequency hopping pattern of controller manager **1106,** and determines if a current frequency is the same as the signaling frequency of the second protocol.

As illustrated in **Fig. 4b****,** interference avoidance manager **1105** checks for interference, as controller manager **1106** controls transceiver **1108,** hopping from frequency to frequency, **1112.** If the current frequency is not the interfering frequency, interference avoidance manager **1105** allows controller manager **1106** to operate transceiver **1108** as known in the art, **1114;** otherwise, it causes controller manager **1106** to suspend transmit/receive operation, **1116,** pro-actively avoiding interference.

Except for the inclusion of receiver **1107** and interference avoidance manager **1105,** each wireless device **104a,** including controller manager **1106** and transceiver **1108,** otherwise operates as known in the art.

Referring again to **Fig. 4a****,** in one embodiment, in support of the "minimally enhanced" devices **104a,** interference avoidance manager **1105** further monitors signals received by transceiver **1108** from other devices **104a.** In particular, interference avoidance manager **1105** monitors for requests from other "minimally enhanced" devices **104a** to be preemptively notified of a "predicted" occurrence of an interference. Upon receiving at least one such request, interference avoidance manager **1105** further causes each prediction to be broadcast for other devices **104a,** thereby allowing the "minimally enhanced" devices **104a** to be able to voluntarily behave as dominated devices (in favor of wireless devices **104b,** the dominant devices).

A "minimally enhanced" device **104a** may be constituted by slightly modifying controller manager **1106** (i.e., without providing receiver **1107** and interference manager **1105).** Controller manager **1106** is slightly modified to broadcast a request to "fully enhanced" devices **104a,** to preemptively provide a prediction of interference, as described earlier. The broadcast may be made e.g. at power on, reset or periodically. Otherwise, controller manager **1107** operates substantially as described earlier, i.e. operating transceiver **1108** to transmit and receive signals as long as no prediction of an interference occurrence is received, and suspending operation of transceiver **1108** for a predetermined duration whenever a prediction of an interference occurrence is received.

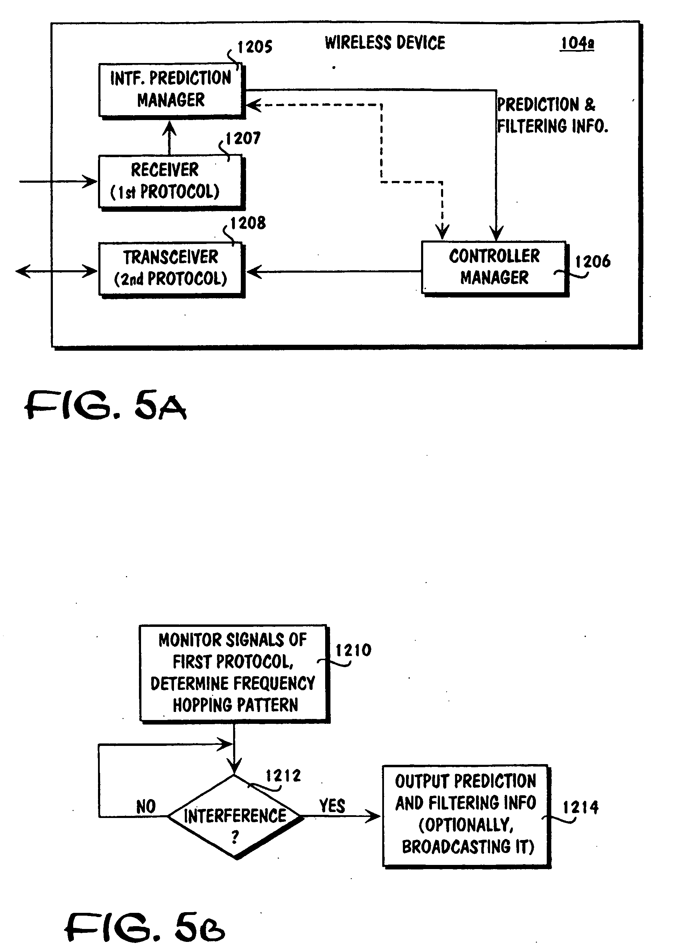

**Figures 5a-5b** illustrate the architecture and operational flow of an enhanced wireless device **104b** of **Fig. 1** in accordance with another embodiment (another "fully enhanced" embodiment). As described earlier, wireless devices **104b** are enhanced to proactively resolve interference. Enhanced wireless devices **104b** are to predict when an interference will occur, and at each of such predicted occurrence, apply an appropriate filter (for a brief moment) to remove interfering signals of wireless devices **104a.** In one embodiment, wireless devices **104a** are SWAP devices and wireless devices **104b** are IEEE 802.11 frequency hopping spread spectrum (FHSS) devices.

As illustrated in **Fig. 5a****,** to enable wireless devices **104b** to so operate, each wireless device **104b,** in addition to conventional transceiver **1208** and controller manager **1206,** is additionally provided with receiver **1207** and interference resolution manager **1205.** The elements are coupled to each other as shown.

Receiver **1207** is used to additionally receive signals transmitted in accordance with the first protocol between wireless devices **104a,** thus allowing the enhanced wireless devices **104b,** to be able to receive signals in the first protocol, in addition to transmitting and receiving signals in the second protocol. Interference resolution manager **1205** is equipped to determine at least a signaling characteristic of the first protocol, and predicts when an interference will occur, based on the determined one or more signal characteristics.

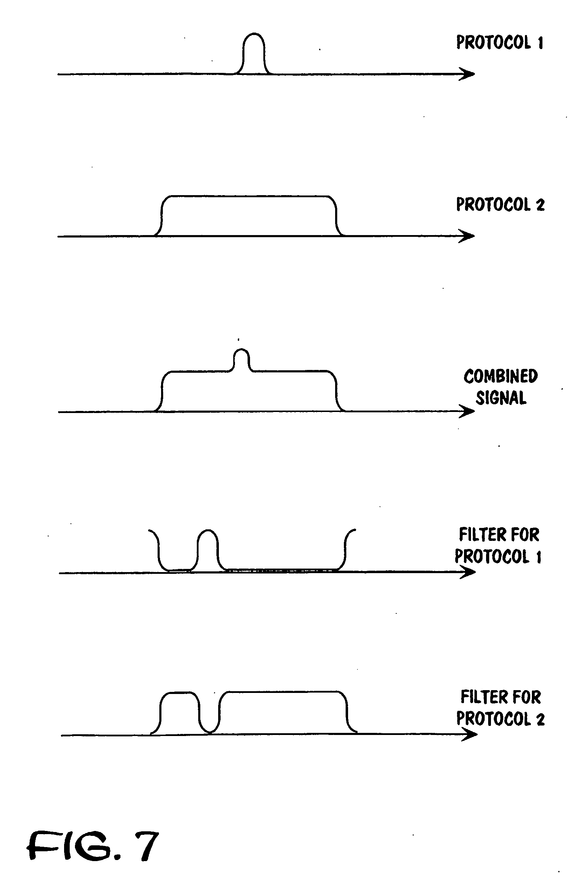

For the illustrated embodiment, interference resolution manager **1205** determines the frequency hopping pattern followed by devices **104a,** and predicts when an interference will occur based on the determined frequency hopping pattern. The determination may be made in any one of a number of techniques known in the art. Additionally, interference resolution manager **1205** further determines an appropriate filter to be applied to remove the interfering signals of wireless devices **104a** at each predicted occurrence of interference. In one embodiment, the appropriate filter is a notch filter, inversely formed based on the interfering signal (as illustrated in **Fig. 7****).**

Thus, as illustrated in **Fig. 5b****,** upon power on or reset, interference resolution manager **1205** monitors the transmit signals of devices **104a** to determine the pseudo random frequency hopping pattern followed by devices **104a,** and the appropriate filter to apply, **1210.** Thereafter, interference resolution manager **1205** determines if an interference is to occur, based on the determined pseudo random frequency hopping pattern, **1212.** Whenever an interference is predicted to occur, interference resolution manager **1205** outputs the appropriate control signal and filtering information for controller manager **1206** to apply the appropriate filter to proactively remove the interfering signals of wireless devices **104a, 1214.**

Except for the determination of the pseudo random frequency hopping pattern of wireless devices **104a,** the determination of the appropriate filter, predicting when an interference will occur, and causing controller manager **1206** to apply the determined appropriate filter, each enhanced wireless device **104b,** including controller manager **1206** and transceiver **1208,** otherwise operates as known in the art.

Referring again to **Fig. 5a****,** in one embodiment, in support of the "minimally enhanced" devices **104b,** interference resolution manager **1205** further monitors signals received by transceiver **1208** from other devices **104b.** In particular, interference resolution manager **1005** monitors for requests from other "minimally enhanced" devices **104b** to be preemptively notified of a predicted occurrence of an interference. Upon receiving at least one such request, interference resolution manager **1205** further causes each prediction to be broadcast for other devices **104b,** including the appropriate filter to apply, thereby allowing the "minimally enhanced" devices **104b** to be able to also proactively resolve interference.

A "minimally enhanced" device **104b** likewise may also be constituted by merely slightly modifying controller manager **1206.** Controller manager **1206** is slightly modified to broadcast a request to "fully enhanced" devices **104b,** to preemptively provide a prediction of interference, as described earlier. Again, the broadcast may be made e.g. at power on, reset, or periodically. Controller manager **1206** further causes the appropriate filter to be applied to received signals, whenever a prediction of an interference occurrence is received.

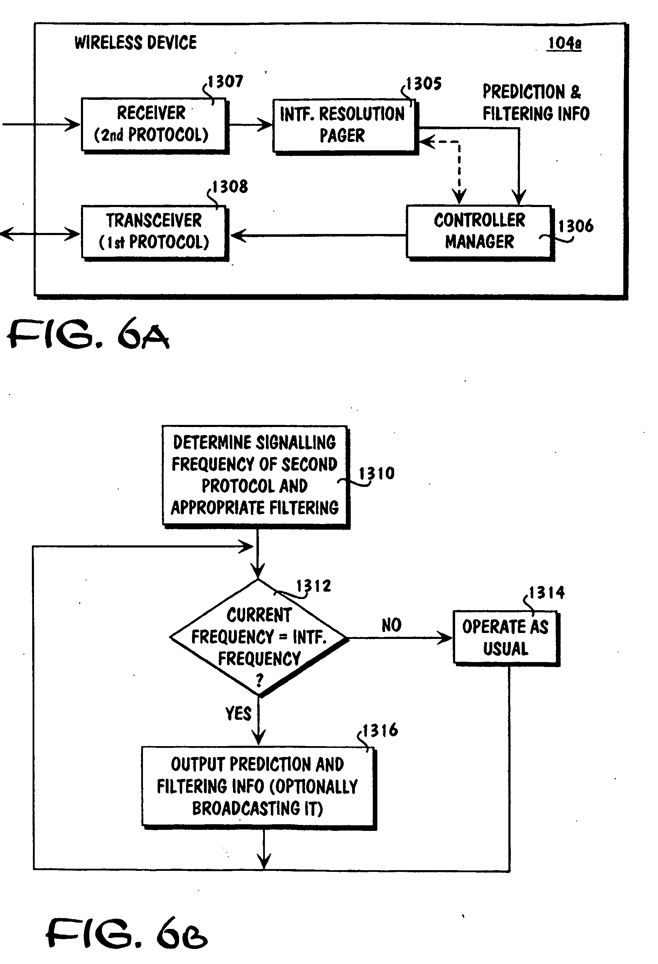

**Figures 6a-6b** illustrate the architecture and operational flow of an enhanced wireless device **104a** of **Fig. 1****,** in accordance with another embodiment (another "fully enhanced" embodiment). As described earlier, wireless devices **104a** are enhanced to proactively resolve interference. Enhanced wireless devices **104a** are to predict when an interference will occur, and at each of such predicted occurrence, apply an appropriate filter (for a brief moment) to remove interfering signals of wireless devices **104b.**

As illustrated in **Fig. 6a****,** to enable wireless devices **104a** to so operate, each wireless device **104a,** in addition to conventional transceiver **1308** and controller manager **1306,** is additionally provided with receiver **1307** and interference resolution manager **1305.** The elements are coupled to each other as shown.

Receiver **1307** is used to additionally receive signals transmitted in accordance with the second protocol between wireless devices **104b,** thus allowing the enhanced wireless device **104a,** to be able to receive signals in the second protocol, in addition to transmitting and receiving signals in the first protocol. Interference resolution manager **1305** is equipped to determine at least a signaling characteristic of the second protocol, determine if an interference is to occur based on the determined one or more signal characteristics, and proactively avoid the interference. For the illustrated embodiment, interference avoidance manager **1105** determines the signaling frequency of the second protocol. Additionally, interference resolution manager **1305** further determines an appropriate filter to be applied to remove the interfering signals of wireless devices **104b** at each predicted occurrence of interference. In one embodiment, the appropriate filter is also a notch filter, inversely formed based on the interfering signal (as illustrated in **Fig. 7**).

Thus, as illustrated in **Fig. 6b****,** upon power on or reset, interference resolution manager **1305** monitors the transmit signals of devices **104b** to determine the signaling frequency of devices **104b,** and the appropriate filter to apply, **1310.** Thereafter, interference resolution manager **1305** monitors the pseudo random frequency hopping pattern of controller manager **1306,** and determines if the current frequency is the same as the signaling frequency of devices **104b, 1312.** If the current frequency is not the interfering frequency, interference resolution manager **1305** allows controller manager **1306** to operate transceiver **1308** as known in the art, otherwise, interference resolution manager **1305** outputs the appropriate control signal, including the filtering information, to cause controller manager **1306** to apply the appropriate filter to the received signals, to proactively resolve interference, **1314.**

Except for the inclusion of receiver **1307** and interference resolution manager **1305,** each wireless device **104a,** including controller manager **1106** and transceiver **1108,** otherwise operates as known in the art.

Referring again to **Fig. 6a****,** in one embodiment, in support of "minimally enhanced" devices **104a,** interference resolution manager **1305** further monitors signals received by transceiver **1308** from other devices **104a.** In particular, interference resolution manager **1305** monitors for requests from other "minimally enhanced" devices **104a** to be preemptively notified of a "predicted" occurrence of an interference. Upon receiving at least one such request, interference resolution manager 1305 further causes each prediction to be broadcast for other devices **104a,** thereby allowing the "minimally enhanced" devices **104a** to also proactively resolve interference.

A "minimally enhanced" device **104a** may likewise be constituted by merely slightly modifying controller manager **1306** (i.e., without providing receiver 1307 and interference manager **1305**). Controller manager **1306** is slightly modified to broadcast a request to "fully enhanced" device **104a,** to preemptively provide a prediction of interference and associated filtering information, as described earlier. Otherwise, controller manager **1307** operates substantially as described earlier, i.e. operating transceiver **1308** to transmit and receive signals as long as no prediction of an interference occurrence is received, and proactively filters received signals whenever a prediction of an interference occurrence is received.

Thus, wireless devices equipped to proactively avoid interference have been described. While the present invention has been described in terms of the above illustrated embodiments, those skilled in the art will recognize that the invention is not limited to the embodiments described

for example, in each of the "filtering" embodiments, the appropriate filtering may be "recursively" or "incrementally" determined. As a further example, each of enhanced wireless devices **104a** and **104b** may be further enhanced to allow the pro-active interference avoidance/resolution function to be configurably enabled or disabled. The description is thus to be regarded as illustrative instead of restrictive on the present invention.

## Claims

1. A method for avoiding conflict with a first block of data transmitted according to a first protocol from a first wireless device (104a), the method comprising:
transmitting a second block of data in one of multiple slots in a first packet and one of multiple slots in a second packet according to a second protocol from a second wireless device (104b) when no conflict exists between transmission of the first block of data and transmission of the first and second packets of the second protocol, wherein the first packet and the second packet are transmitted at different frequencies;
receiving, in the second wireless device (104b), signals transmitted by the first wireless device (104a) in accordance with the first protocol;
predicting in the second wireless device (104b), based on the received signals of the first protocol, when interference will occur;
blocking transmission of one of the first packet and the second packet in the second wireless device (104b) if the other of the first packet and the second packet transmitted according to the second protocol is predicted to interfere with transmission of the first block of data; and
blocking transmission of the first packet and the second packet in the second wireless device (104b) if the first packet and the second packet transmitted according to the second protocol are predicted to interfere with transmission of the first block of data.

2. The method of claim 1, wherein the first protocol comprises IEEE 802.11 protocols.

3. The method of claim 1, wherein the second protocol comprises Shared Wireless Access Protocol (SWAP).

4. The method of claim 1, wherein the second protocol communicates voice data.

5. The method of claim 1, wherein data transmitted according to the second protocol is voice data.

6. The method of claim 1, wherein packets communicated according to the first protocol are for use with a first network (108a) and packets communicated according to the second protocol are for use with a second network (108b).

7. The method of claim 1, further comprising adaptively managing time sharing between packets communicated according to the first protocol and packets communicated according to the second protocol.

8. The method of claim 7, wherein adaptively managing time sharing is based, at least in part, on transmit or receive workloads of a first wireless transceiver (102a) and a second wireless transceiver (102b) that communicate according to the first protocol and the second protocol, respectively.

9. A machine-readable medium having stored thereon instructions for avoiding conflict with a first block of data transmitted according to a first protocol from a first wireless device (104b) over a first network (108a), the instructions, when executed, being arranged to cause:
a second wireless device (104b) to:
transmit a second block of data in one of multiple slots in a first packet and one of multiple slots in a second packet according to a second protocol over a second network (108b) when no conflict exists between transmission of the first block of data and transmission of the first and second packets of the second protocol, the first packet and the second packet being transmitted at different frequencies;
receive signals transmitted by the first wireless device (104a) in accordance with the first protocol;
predict, based on the received signals of the first protocol, when interference will occur between transmissions from the first and second wireless devices;
block transmission of one of the first packet and the second packet if the other of the first packet and the second packet transmitted according to the second protocol is predicted to interfere with transmission of the first block of data; and
block transmission of the first packet and the second packet if the first packet and the second packet transmitted according to the second protocol are predicted to interfere with transmission of the first block of data.

10. The machine-readable medium of claim 9, wherein the first protocol comprises IEEE 802.11 protocols.

11. The machine-readable medium of claim 9, wherein the second protocol comprises Shared Wireless Access Protocol (SWAP).

12. The machine-readable medium of claim 9, wherein data transmitted according to the second protocol is voice data.

13. The machine-readable medium of claim 9, wherein packets communicated according to the first protocol are for use with the first network (108a) and packets communicated according to the second protocol are for us with the second network (108b).

14. The machine-readable medium of claim 9, further comprising instructions that, when executed, cause the one or more electronic systems to adaptively manage time sharing between packets communicated according to the first protocol and packets communicated according to the second protocol.

15. The machine-readable medium of claim 14, wherein adaptively managing time sharing is based, at least in part, on transmit or receive workloads of a first wireless transceiver (102a) and a second wireless transceiver (102b) that communicate according to the first protocol and the second protocol, respectively.

16. An apparatus for avoiding conflict with a first block of data transmitted according to a first protocol from a first wireless transceiver, the apparatus comprising:
a second wireless transceiver (1008) arranged to transmit a second block of data in one of multiple slots in a first packet and one of multiple slots in a second packet according to a second protocol when no conflict exists between transmission of the first block of data and transmission of the first and second packets of the second protocol, the first packet and the second packet being transmitted at different frequencies; wherein the second wireless transceiver includes:
a receiver (1007) arranged to receive signals transmitted by the first transceiver in accordance with the first protocol; and
an interference avoidance manager (1005) arranged to predict, based on the received signals of the first protocol, when interference will occur between transmissions from the first and second transceivers, block transmission of one of the first packet and the second packet if the other of the first packet and second packet transmitted according to the second protocol is predicted to interfere with transmission of the first block of data, and to block transmission of the first packet and the second packet if the first packet and the second packet transmitted according to the second protocol are predicted to interfere with transmission of the first block of data.

17. The apparatus of claim 16, wherein the first protocol comprises IEEE 802.11 protocols.

18. The apparatus of claim 16, wherein the second protocol comprises Shared Wireless Access Protocol (SWAP).

19. The apparatus of claim 16, wherein data transmitted according to the second protocol is voice data.

20. The apparatus of claim 16, wherein packets communicated according to the first protocol are for use with a first network (108a) and packets communicated according to the second protocol are for use with a second network (108b).

21. The apparatus of claim 16, further comprising a control circuit (1006) coupled to the second wireless transceiver (1008), the control circuit being arranged to adaptively manage time sharing between packets communicated according to the first protocol and packets communicated according to the second protocol.

22. The apparatus of claim 21, wherein the control circuit is arranged to adaptively manage time sharing based at least in part on transmit or receive workloads of the first wireless transceiver and the second wireless transceiver (1008).

## Patentansprüche

1. Verfahren zum Vermeiden eines Konflikts mit einem ersten Datenblock, der nach einem ersten Protokoll von einer ersten Drahtlos-Vorrichtung (104a) gesendet wird, wobei das Verfahren Folgendes umfasst:
das Senden eines zweiten Datenblocks in einem von mehreren Slots in einem ersten Datenpaket und einem von mehreren Slots in einem zweiten Datenpaket nach einem zweiten Protokoll von einer zweiten Drahtlos-Vorrichtung (104b), wenn kein Konflikt zwischen der Sendung des ersten Datenblocks und der Sendung des ersten und zweiten Datenpakets des zweiten Protokolls besteht, worin das erste Datenpaket und das zweite Datenpaket bei verschiedenen Frequenzen übertragen werden;
das Empfangen von Signalen, die von der ersten Drahtlos-Vorrichtung (104a) gesendet werden, in der zweiten Drahtlos-Vorrichtung (104b) nach dem ersten Protokoll;
das Vorhersagen in der zweiten Drahtlos-Vorrichtung (104b) auf Grund des empfangenen Signals des ersten Protokolls, dass es zu Interferenzen kommen wird;
das Blockieren der Sendung von entweder dem ersten Datenpaket oder dem zweiten Datenpaket in der zweiten Drahtlos-Vorrichtung (104b), wenn von dem jeweils anderen von nach dem zweiten Protokoll gesendetem erstem Datenpaket und zweitem Datenpaket vorhersagt wird, dass es die Sendung des ersten Datenblocks störend beeinflussen wird; und
das Blockieren der Sendung des ersten Datenpakets und des zweiten Datenpakets in der zweiten Drahtlos-Vorrichtung (104b), wenn von dem ersten Datenpaket und dem zweiten Datenpaket, die jeweils nach dem zweiten Protokoll übertragen werden, vorhergesagt wird, dass sie die Sendung des ersten Datenblocks störend beeinflussen werden.

2. Verfahren nach Anspruch 1, worin das erste Protokoll IEEE-802.11-Protokolle umfasst.

3. Verfahren nach Anspruch 1, worin das zweite Protokoll Shared Wireless Access Protocol (SWAP) umfasst.

4. Verfahren nach Anspruch 1, worin das zweite Protokoll Sprachdaten kommuniziert.

5. Verfahren nach Anspruch 1, worin die nach dem zweiten Protokoll gesendeten Daten Sprachdaten sind.

6. Verfahren nach Anspruch 1, worin nach dem ersten Protokoll kommunizierten Datenpakete der Verwendung mit einem ersten Netzwerk (108a) dienen und nach dem zweiten Protokoll kommunizierte Daten der Verwendung mit einem zweiten Netzwerk (108b) dienen.

7. Verfahren nach Anspruch 1, weiters umfassend das adaptive Management der Zeitteilung zwischen nach dem ersten Protokoll kommunizierten Datenpaketen und nach dem zweiten Protokoll kommunizierten Datenpaketen.

8. Verfahren nach Anspruch 7, worin das anpassende Regeln der zeitlichen Aufteilung zumindest teilweise auf der Sende- oder Empfangsarbeitsbelastung eines ersten Drahtlos-Transceivers (1 02a) und eines zweiten Drahtlos-Transceivers (1 02b) basiert, die jeweils nach dem ersten Protokoll bzw. nach dem zweiten Protokoll kommunizieren.

9. Maschinenlesbares Medium, auf dem Anweisungen zum Vermeiden eines Konflikts mit einem ersten Datenblock, der nach einem ersten Protokoll von einer ersten Drahtlos-Vorrichtung (104b) über ein erstes Netzwerk (108a) gesendet wird, gespeichert sind, wobei die Anweisungen, wenn sie ausgeführt werden, so gestaltet sind, dass sie:
eine zweite drahtlose Vorrichtung (1 04b) dazu bringen,
einen zweiten Datenblock in einem von mehreren Slots in einem ersten Datenpaket und in einem von mehreren Slots in einem zweiten Datenpaket nach einem zweiten Protokoll über ein zweites Netzwerk (108b) zu senden, wenn kein Konflikt zwischen der Sendung des ersten Datenblocks und der Sendung des ersten und des zweiten Datenpakets des zweiten Protokolls besteht, wobei das erste Datenpaket und das zweite Datenpaket bei verschiedenen Frequenzen gesendet werden;
Signale zu empfangen, die von der ersten Drahtlos-Vorrichtung (104a) nach dem ersten Protokoll gesendet werden;
auf Grund der empfangenen Signale des ersten Protokolls vorherzusagen, dass es zu Interferenzen zwischen Sendungen der ersten und der zweiten Drahtlos-Vorrichtung kommen wird;
die Sendung entweder des ersten Datenpakets oder des zweiten Datenpakets zu blockieren, wenn von dem jeweils anderen von nach dem zweiten Protokoll gesendetem erstem Datenpaket und zweitem Datenpaket vorhergesagt wird, dass es mit der Sendung des ersten Datenblocks interferieren wird; und
die Sendung des ersten Datenpakets und des zweiten Datenpakets zu blockieren, wenn von dem ersten Datenpaket und dem zweiten Datenpaket, die nach dem zweiten Protokoll gesendet werden, vorhergesagt wird, dass sie mit der Sendung des ersten Datenblocks interferieren werden.

10. Maschinenlesbares Medium nach Anspruch 9, worin das erste Protokoll IEEE-802.11-Protokolle umfasst.

11. Maschinenlesbares Medium nach Anspruch 9, worin das zweite Protokoll Shared Wireless Access Protocol (SWAP) umfasst.

12. Maschinenlesbares Medium nach Anspruch 9, worin die nach dem zweiten Protokoll gesendeten Daten Sprachdaten sind.

13. Maschinenlesbares Medium nach Anspruch 9, worin nach dem ersten Protokoll kommunizierte Daten der Verwendung mit dem ersten Netzwerk (108a) dienen und nach dem zweiten Protokoll kommunizierte Datenpakete der Verwendung mit dem zweiten Netzwerk (108b) dienen.

14. Maschinenlesbares Medium nach Anspruch 9, das weiters Anleitungen umfasst, die, wenn sie ausgeführt werden, das eine oder die mehreren elektronischen Systeme dazu bringen, die zeitliche Aufteilung zwischen nach dem ersten Protokoll kommunizierten Datenpaketen und nach dem zweiten Protokoll kommunizierten Datenpaketen adaptiv zu managen.

15. Maschinenlesbares Medium nach Anspruch 9, worin das adaptive Management der Zeitteilung zumindest teilweise auf der Sende- oder Empfangsarbeitsbelastung eines ersten Drahtlos-Transceivers (102a) und eines zweiten Drahtlos-Transceivers (102b) basiert, die jeweils nach dem ersten Protokoll bzw. nach dem zweiten Protokoll kommunizieren.

16. Vorrichtung zum Vermeiden eines Konflikts mit einem ersten Datenblock, der nach einem ersten Protokoll von einem ersten Drahtlos-Transceiver gesendet wird, wobei die Vorrichtung Folgendes umfasst:
einen zweiten Drahtlos-Transceiver (1008), der so ausgebildet ist, dass er einen zweiten Datenblock in einem von mehreren Slots in einem ersten Datenpaket und einem von mehreren Slots in einem zweiten Datenpaket nach einem zweiten Protokoll sendet, wenn kein Konflikt zwischen der Sendung des ersten Datenblocks und der Sendung des ersten und des zweiten Datenpakets des zweiten Protokolls besteht, wobei das erste Datenpaket und das zweite Datenpaket bei verschiedenen Frequenzen gesendet werden; worin der zweite drahtlose Transceiver Folgendes umfasst:
eine Empfangsvorrichtung (1007), die so ausgerichtet ist, dass sie Signale empfängt, die vom ersten Transceiver nach dem ersten Protokoll gesendet werden; und
einen Interferenzvermeidungs-Manager (1005), der so ausgebildet ist, dass er auf Grund der empfangenen Signale des ersten Protokolls vorhersagt, dass es zu Interferenzen zwischen Sendungen vom ersten und vom zweiten Transceiver kommt, die Sendung entweder des ersten Datenpakets oder des zweiten Datenpakets blockiert, wenn von dem jeweils anderen von nach dem zweiten Protokoll gesendetem erstem Datenpaket und zweitem Datenpaket vorhersagt wird, dass es mit der Sendung des ersten Datenblocks interferieren wird, und die Sendung des ersten Datenpakets und des zweiten Datenpakets blockiert, wenn von dem ersten Datenpaket und dem zweiten Datenpaket, die nach dem zweiten Protokoll gesendet werden, vorhergesagt wird, dass sie mit der Sendung des ersten Datenblocks interferieren werden.

17. Vorrichtung nach Anspruch 16, worin das erste Protokoll IEEE-802.11-Protokolle umfasst.

18. Vorrichtung nach Anspruch 16, worin das zweite Protokoll Shared Wireless Access Protocol (SWAP) umfasst.

19. Vorrichtung nach Anspruch 16, worin die nach dem zweiten Protokoll gesendeten Daten Sprachdaten sind.

20. Vorrichtung nach Anspruch 16, worin nach dem ersten Protokoll kommunizierte Datenpakete der Verwendung mit einem ersten Netzwerk (108a) dienen, und nach dem zweiten Protokoll kommunizierten Datenpakete der Verwendung mit einem zweiten Netzwerk (108b) dienen.

21. Vorrichtung nach Anspruch 16, weiters umfassend einen Regelschaltkreis (1006), der mit dem zweiten Drahtlos-Transceiver (1008) verbunden ist, wobei der Regelkreis so ausgebildet ist, dass er die Zeitteilung zwischen nach dem ersten Protokoll kommunizierten Datenpaketen und nach dem zweiten Protokoll kommunizierten Datenpaketen adaptiv managt.

22. Vorrichtung nach Anspruch 21, worin der Regelschaltkreis so ausgebildet ist, dass er die Zeitteilung zumindest teilweise auf Grund der Sende- oder Empfangsarbeitsbelastung des ersten Drahtlos-Transceivers und des zweiten Drahtlos-Transceivers (1008) adaptiv managt.

## Revendications

1. Procédé pour éviter un conflit avec un premier bloc de données transmis selon un premier protocole d'un premier dispositif sans fil (104a), le procédé comprenant:
transmettre un second bloc de données dans l'une parmi de multiples tranches au sein d'un premier paquet et l'une parmi de multiples tranches au sein d'un second paquet, selon un second protocole, à partir d'un second dispositif sans fil (104b), lorsqu'aucun conflit n'existe entre la transmission du premier bloc de données et la transmission des premier et second paquets du second protocole, dans lequel le premier paquet et le second paquet sont transmis à différentes fréquences;
recevoir, dans le second dispositif sans fil (104b), des signaux transmis par le premier dispositif sans fil (104a) selon le premier protocole;
prédire, dans le second dispositif sans fil (104b), sur la base des signaux reçus du premier protocole, l'occurrence d'un brouillage;
bloquer la transmission de l'un parmi le premier paquet et le second paquet dans le second dispositif sans fil (104b) lorsque l'autre parmi le premier paquet et le second paquet transmis selon le second protocole est prédit comme étant de nature à occasionner un brouillage avec la transmission du premier bloc de données; et
bloquer la transmission du premier paquet et du second paquet dans le second dispositif sans fil (104b) lorsque le premier paquet et le second paquet transmis selon le second protocole sont prédits comme étant de nature à occasionner un brouillage avec la transmission du premier bloc de données.

2. Procédé selon la revendication 1, dans lequel le premier protocole comporte les protocoles IEEE 802.11.

3. Procédé selon la revendication 1, dans lequel le second protocole comporte le protocole d'accès sans fil partagé (SWAP).

4. Procédé selon la revendication 1, dans lequel le second protocole communique des données vocales.

5. Procédé selon la revendication 1, dans lequel les données transmises selon le second protocole sont des données vocales.

6. Procédé selon la revendication 1, dans lequel les paquets communiqués selon le premier protocole sont destinés à être utilisés avec un premier réseau (108a) et les paquets communiqués selon le second protocole sont destinés à être utilisés avec un second réseau (108b).

7. Procédé selon la revendication 1, comportant en outre l'étape consistant à gérer de manière adaptative le partage du temps entre les paquets communiqués selon le premier protocole et les paquets communiqués selon le second protocole.

8. Procédé selon la revendication 7, dans lequel l'étape consistant à gérer de manière adaptative le partage du temps est basée, au moins en partie, sur les charges de travail de réception ou de transmission d'un premier émetteur - récepteur sans fil (102a) et d'un second émetteur - récepteur sans fil (102b) lesquels communiquent selon le premier protocole et le second protocole, respectivement.

9. Support lisible par une machine présentant des instructions stockées dans celui-ci pour éviter un conflit avec un premier bloc de données transmis selon un premier protocole d'un premier dispositif sans fil (104b) sur un premier réseau (108a), les instructins, lorsqu'elles sont exécutées, amènent:
un second dispositif sans fil (104b) à:
transmettre un second bloc de données dans l'une parmi de multiples tranches au sein d'un premier paquet et l'une de multiples tranches au sein d'un second paquet selon un second protocole sur un second réseau (108b) lorsqu'aucun conflit n'existe entre la transmission du premier bloc de données et la transmission des premier et second paquets du second protocole, le premier paquet et le second paquet étant transmis à des fréquences distinctes;
recevoir des signaux transmis par le premier dispositif sans fil (104a) selon le premier protocole;
prédire, sur la base des signaux reçus du premier protocole, l'occurrence d'un brouillage entre les transmissions en provenance des premier et second dispositifs sans fil;
bloquer la transmission de l'un parmi le premier paquet et le second paquet lorsque l'autre parmi le premier paquet et le second paquet transmis selon le second protocole est prédit comme étant de nature à occasionner un brouillage avec la transmission du premier bloc de données; et
bloquer la transmission du premier paquet et du second paquet lorsque le premier paquet et le second paquet transmis selon le second protocole sont prédits comme étant de nature à occasionner un brouillage avec la transmission du premier bloc de données.

10. Support lisible par une machine selon la revendication 9, dans lequel le premier protocole comporte les protocoles IEEE 802.11.

11. Support lisible par une machine selon la revendication 9, dans lequel le second protocole comporte le protocole d'accès sans fil partagé (SWAP).

12. Support lisible par une machine selon la revendication 9, dans lequel les données transmises selon le second protocole sont des données vocales.

13. Support lisible par une machine selon la revendication 9, dans lequel les paquets communiqués selon le premier protocole sont destinés à être utilisés avec le premier réseau (108a) et les paquets communiqués selon le second protocole sont destinés à être utilisés avec le second réseau (108b).

14. Support lisible par une machine selon la revendication 9, présentant en outre des instructions lesquelles, lorsqu'elles sont exécutées, amènent ledit un ou lesdits plusieurs systèmes électroniques à gérer de manière adaptative le partage du temps entre les paquets communiqués selon le premier protocole et les paquets communiqués selon le second protocole.

15. Support lisible par une machine selon la revendication 14, dans lequel l'étape consistant à gérer de manière adaptative le partage du temps est basée, au moins en partie, sur les charges de travail de réception ou de transmission d'un premier émetteur - récepteur sans fil (102a) et d'un second émetteur - récepteur sans fil (102b) lesquels communiquent selon le premier protocole et le second protocole, respectivement.

16. Dispositif pour éviter un conflit avec un premier bloc de données transmis selon un premier protocole d'un premier émetteur-récepteur sans fil, l'appareil comprenant:
un second émetteur - récepteur sans fil (1008) destiné à transmettre un second bloc de données dans l'une parmi de multiples tranches au sein d'un premier paquet et l'une parmi de multiples tranches au sein d'un second paquet selon un second protocole lorsqu'aucun conflit n'existe entre la transmission du premier bloc de données et la transmission des premier et second paquets du second protocole, le premier paquet et le second paquet étant transmis à des fréquences distinctes; dans lequel le second émetteur - récepteur sans fil comporte:
un récepteur (1007) agencé en vue de recevoir des signaux transmis par le premier émetteur - récepteur selon le premier protocole; et
un gestionnaire d'évitement de brouillage (1005) agencé en vue de prédire, sur la base des signaux reçus du premier protocole, l'occurrence d'un brouillage entre les transmissions en provenance des premier et second émetteurs - récepteurs, de bloquer la transmission de l'un parmi le premier paquet et le second paquet lorsque l'autre parmi le premier paquet et le second paquet transmis selon le second protocole est prédit comme étant de nature à occasionner un brouillage avec la transmission du premier bloc de données, et de bloquer la transmission du premier paquet et du second paquet lorsque le premier paquet et le second paquet transmis selon le second protocole sont prédits comme étant de nature à occasionner un brouillage avec la transmission du premier bloc de données.

17. Dispositif selon la revendication 16, dans lequel le premier protocole comporte les protocoles IEEE 802.11.

18. Dispositif selon la revendication 16, dans lequel le second protocole comporte le protocole d'accès sans fil partagé (SWAP).

19. Dispositif selon la revendication 16, dans lequel les données transmises selon le second protocole sont des données vocales.

20. Dispositif selon la revendication 16, dans lequel les paquets communiqués selon le premier protocole sont destinés à être utilisés avec un premier réseau (108a) et les paquets communiqués selon le second protocole sont destinés à être utilisés avec un second réseau (108b).

21. Dispositif selon la revendication 16, comportant en outre un circuit de commande (1006) couplé au second émetteur - récepteur sans fil (1008), le circuit de commande étant agencé en vue de gérer de manière adaptative le partage du temps entre les paquets communiqués selon le premier protocole et les paquets communiqués selon le second protocole.

22. Dispositif selon la revendication 21, dans lequel le circuit de commande est agencé en vue de gérer de manière adaptative le partage du temps sur la base, au moins en partie, de charges de travail de réception ou de transmission du premier émetteur - récepteur sans fil et du second émetteur - récepteur sans fil (1008).
